# EUROPÄISCHE PATENTANMELDUNG

(11) **EP 0 842 699 A2**
(43) Veröffentlichungstag der Anmeldung: **20.05.1998**
(21) Anmeldenummer: 97118083.1
(22) Anmeldetag: 17.10.1997
(51) Int. Cl.: B01J 25/00, B01J 25/02, C08G 73/00

(54) **Metall-Festbettkatalysator nach Raney, Verfahren zu seiner Herstellung sowie ein Verfahren zur Hydrierung von Polymeren unter Verwendung dieses Katalysators**

(30) Priorität: 18.10.1996 DE 19643126
(71) Anmelder: BASF AKTIENGESELLSCHAFT, 67056 Ludwigshafen (DE)
(72) Erfinder: Breitscheidel, Boris, Dr., 36043 Fulda (DE); Diehlmann, Uwe, 67434 Neustadt (DE); Rühl, Thomas, Dr., 67227 Frankenthal (DE); Weiguny, Sabine, Dr., 64331 Weiterstadt (DE)
(74) Vertreter: Isenbruck, Günter, Dr.

(57) **Zusammenfassung**

Aktivierter, metallpulverfreier, Makroporen aufweisender Metall-Festbettkatalysator nach Raney auf der Basis einer Legierung aus Aluminium und mindestens einem Metall der VIII. Nebengruppe des Periodensystems mit einem Gehalt an Makroporen von mehr als 80 Vol.-%, bezogen auf die Gesamtporen, Verfahren zu seiner Herstellung sowie dessen Verwendung zur Hydrierung von niedermolekularen und polymeren organischen Verbindungen.

## Beschreibung

Die vorliegende Erfindung betrifft einen neuen metallpulverfreien, Makroporen aufweisenden Metall-Festbettkatalysator nach Raney auf der Basis einer Legierung aus Aluminium und mindestens einem Metall der VIII. Nebengruppe des Periodensystems, einen Vorläufer für diesen Katalysator, ein Verfahren zu dessen Herstellung, die Verwendung des erfindungsgemäßen Katalysators zur hydrierenden Behandlung von organischen Verbindungen, insbesondere von Polymeren mit hydrierbaren Gruppen, vorzugsweise mit Nitrilgruppen.

Raney-Katalysatoren, insbesondere Raney-Metall-Festbettkatalysatoren, sind seit langem bekannt, und entsprechende Verfahren zu ihrer Herstellung wie auch ihre Anwendungen sind vielfach beschrieben worden.

Die US 4,826,799 und US 4,895,994 beschreiben die Herstellung von aktivierten Metall-Festbettkatalysatoren nach Raney durch Vermischen eines Pulvers einer Legierung aus Katalysatormetall und Aluminium mit einem organischen Polymer und gegebenenfalls einem Verformungsmittel, Verformen dieser Mischung zu gewünschten Formkörpern und Calcinieren der Formkörper in einem 2-Stufenprozeß an Luft bei Temperaturen über 850°C. Daran schließt sich die Aktivierung der Formkörper durch Auslaugen des restlichen, während der Calcinierung nicht oxidierten Aluminiums an.

Dieses Verfahren führt zu einem Katalysator, der ein Porensystem aufweist. Das Porensystem im fertigen Katalysator ermöglicht die Diffusion von Eduktmolekülen in den Katalysator hinein und von Produktmolekülen hinaus. Die Makroporosität der dort beschriebenen Katalysatoren liegt im Bereich von 50 bis 80%, bezogen auf das Gesamtporenvolumen.

Die gemäß den US 4,826,799 und 4 895 994 hergestellten Katalysatoren weisen jedoch gravierende Nachteile auf. So enthalten sie 1 bis 42 Gew.-%, bezogen auf den Gesamkatalysator, α-Aluminiumoxid.

Das als Bindemittel verwendete α-Aluminiumoxid ist katalytisch inaktiv und mindert damit die Katalysatoraktivität. Während des Calcinierens bildet sich auf der Oberfläche der Legierungspartikel eine mehr oder weniger geschlossene Schicht aus diesem inaktiven, in Alkalien unlöslichen, Material. Dadurch wird die Aktivierung der Legierung erschwert. Im fertigen Katalysator stellt diese Schicht eine Diffusionsbarriere für die Eduktmoleküle dar, was zu zusätzlichen Aktivitätseinbußen führt.

Von modernen Katalysatorsystemen wird zum Schutze der Umwelt eine leichte Wiederaufarbeitbarkeit gefordert. Die Aufarbeitung von keramisch gebundenen Metall-Festbettkatalysatoren ist jedoch wegen des unlöslichen keramischen Bindemittels schwierig.

In DE-A 43 35 360, DE-A 43 45 265 und EP-A-0 648 534 werden aktivierte Metall-Festbettkatalysatoren nach Raney beschrieben, die durch Verformen eines Pulvers wenigstens einer Katalysatorlegierung mit einem Pulver der reinen Katalysatormetalle unter Zusatz von Verformungshilfsstoffen und Porenbildnern und anschließendem Calcinieren bei Temperaturen unter 850°C erhalten werden. Beim Calcinieren verbrennen die Verformungshilfsstoffe und Porenbildner, während Legierungspulver und Metallpulver zusammen zu einem porösen Formkörper sintern. Durch Auslaugen des in den Katalysatorlegierungen enthaltenen Aluminiums mit Natronlauge wird der Formkörper in einer oberflächlichen Schale aktiviert.

Entscheidender Nachteil dieser aktivierten Metall-Festbettkatalysatoren ist, daß diese Katalysatoren nur partiell makroporös sind und sich damit für die katalytische Umsetzung größerer Moleküle nur eingeschränkt eignen. Außerdem müssen zur Erzielung einer ausreichend hohen mechanischen Stabilität der Katalysator-Formkörper diesem bei der Herstellung reine Katalysatormetalle zugesetzt werden, was sich negativ auf die Herstellungskosten und damit auf die Wirtschaftlichkeit der Katalysatoren auswirkt. Darüber hinaus können diese Metall-Festbettkatalysatoren nur oberflächlich aktiviert werden, um eine ausreichende mechanische Stabilität der Formkörper auch im aktivierten Zustand zu gewährleisten. Eine oberflächliche Aktivierung wirkt sich jedoch negativ auf die katalytische Aktivität aus.

Die DE-A-44 46 907 beschreibt ein Verfahren zur Herstellung eines Hydrierungskatalysators nach Raney auf der Basis einer Legierung aus Aluminium und einem Übergangsmetall, unter Verwendung eines Gemischs aus Polyvinylalkohol und Wasser oder Stearinsäure als Hilfsmittel. Die Molmasse des Polyvinylalkohols liegt im Bereich von 3.000 bis 6.000 g/mol.

Nachteilig bei dem dort beschriebenen Verfahren ist die Verwendung niedermolekularer Polyvinylalkohole als Hilfsmittel. Dies führt zu einem geringen Anteil an Makroporen und damit zu einer geringeren Katalysatoräktivität.

Wie bereits eingangs erwähnt, betrifft die vorliegende Erfindung auch die Verwendung des erfindungsgemäßen Katalysators zur hydrierenden Behandlung von organischen Verbindungen, insbesondere zur Hydrierung, Dehydrierung, Hydrogenolyse, aminierenden Hydrierung und Dehalogenierung von organischen Verbindungen, sowie ein Verfahren zur Hydrierung eines Polymers, das mindestens eine hydrierbare Gruppe aufweist, in Gegenwart des erfindungsgemäßen Katalysators.

Eine Gruppe von Polymeren, die in der Vergangenheit besonders intensiv als Edukte in Verfahren zur Hydrierung von Polymeren eingesetzt wurden, stellen Nitrilgruppen aufweisende Polymere dar. Diese werden auch im erfindungsgemäßen Verfahren vorzugsweise eingesetzt, wobei die entsprechenden Amingruppen enthaltenden Polymere erhalten werden.

Die bei diesem Verfahren erhaltenen Polymere mit Amingruppen können beispielsweise als Verzweigungsmittel, Vernetzungsmittel oder Komplexbildner eingesetzt werden, wobei als bevorzugte Anwendungsgebiete für derartige Polymere z.B. die Papierherstellung, Waschmittelindustrie, Klebstoffe und Kosmetika zu nennen sind.

Für die Reduktion von Polymeren, die Nitrilgruppen enthalten, zu Polymeren, die Amingruppen enthalten, wurden in der Vergangenheit eine Vielzahl von Systemen beschrieben, wobei neben der Reduktion mit komplexen Metallhydriden, wie sie beispielsweise in den DE-C 12 26 303 und DE-C 29 05 671 beschrieben sind, auch die Hydrierung mit Wasserstoff zu nennen ist.

Letztere ist wesentlich kostengünstiger und benötigt im Gegensatz zur Reduktion mit komplexen Metallhydriden nur katalytische Mengen einer metallhaltigen Komponente, was sowohl ökonomische als auch ökologische Vorteile mit sich bringt.

Die Hydrierung mit Wasserstoff wurde in der Vergangenheit sowohl homogen katalysiert als auch heterogen katalysiert durchgeführt.

Die homogene Katalyse ist chemisch elegant, doch die Katalysatorabtrennung ist wesentlich aufwendiger als bei der heterogenen Katalyse. Insbesondere bei katalytischen Prozessen an Polymeren ist die Verwendung eines homogenen Katalysators nachteilig, da eine destillative Abtrennung des polymeren Produkts vom Katalysator nicht möglich ist. Wenn man das polymere Produkt durch Kristallisation oder Fällung vom homogenen Katalysator abtrennen will, erfordert dies mehrmalige Kristallisation, da Einschlüsse des Katalysators unvermeidbar sind, was zu verlängerten Reaktionsdauern und höheren Kosten führt.

Probleme bei der Katalysatorabtrennung treten bei der heterogen-katalytischen Reaktionsführung nicht auf. Die bislang bekannten heterogen-katalytischen Verfahren zur Hydrierung von Polymeren, die Nitrilgruppen enthalten, unter Verwendung von Metall-Festbettkatalysatoren nach Raney führen jedoch häufig nur zu unbefriedigenden Umsätzen und Selektivitäten.

So beschreibt die US 2,456,428 die Hydrierung von Polyacrylnitril, Polymethacrylnitril und ähnlichen Polymeren. Nach der Hydrierung in Gegenwart von Raney-Nickel als Katalysator muß nicht-umgesetztes Polymer vor der weiteren Aufarbeitung abgetrennt werden. Die dort beschriebene Umsetzung ist demgemäß nicht vollständig verlaufen, die mit diesem Verfahren zu erreichenden Ausbeuten sind schlecht.

Gemäß der US 3,122,526, die die Hydrierung von cyanoethyliertem Polyacrylnitril unter Verwendung von Raney-Nickel als Katalysator betrifft, wird ebenfalls eine nur mäßige Ausbeute des korrespondierenden Amins von unter 10% erhalten.

Die US 2,585,583 beschreibt die Hydrierung von Copolymeren aus Butadien und Acrylnitril bzw. Methacrylnitril an Suspensions-Hydrierkatalysatoren. Die US 2,647,146 beschreibt die Hydrierung von Butadien-Oligomeren mit Nitrilendgruppen unter Verwendung eines Gemischs aus zwei Suspensionskatalysatoren (Pd auf Kohle und Ni auf Kieselgur). Gemäß dieser beiden Verfahren müssen jeweils die dort verwendeten Katalysatoren durch Filtration von der Reaktionslösung abgetrennt werden.

Zusammenfassend läßt sich demnach feststellen, daß die Hydrierung von Polymeren, die Nitrilgruppen enthalten, zu Polymeren, die Amingruppen enthalten, zwar bekannt ist, gute Ausbeuten des Amingruppen enthaltenden Polymers bislang jedoch nur unter Verwendung von Suspensionskatalysatoren erreicht wurden. Diese müssen durch Filtration von der Reaktionslösung abgetrennt werden und können nicht in einem Festbettreaktor eingesetzt werden.

In Anbetracht des oben genannten Standes der Technik liegt der vorliegenden Erfindung die Aufgabe zugrunde, einen Makroporen aufweisenden Metall-Festbettkatalysator nach Raney mit ausreichender mechanischer Stabilität und hoher katalytischer Aktivität zu entwickeln, der die geschilderten Nachteile des Standes der Technik, wie ein zu geringer Makroporenanteil oder das Vorhandensein von signifikanten Mengen von α-Aluminiumoxid, vermeidet.

Ferner liegt der vorliegenden Erfindung die Aufgabe zugrunde, ein Verfahren zur Hydrierung eines Polymers, das mindestens eine hydrierbare Gruppe aufweist, bereitzustellen, mit Hilfe dessen es gelingt, mit hohem Umsatz und hohen Ausbeuten das entsprechende hydrierte Polymer herzustellen.

Diese Aufgaben konnten durch den erfindungsgemäßen Katalysator und das erfindungsgemäße Verfahren zur Hydrierung eines Polymers, das mindestens eine hydrierbare Gruppe aufweist, gelöst werden.

Genauer gesagt, betrifft die vorliegende Erfindung einen aktivierten, metallpulverfreien, Makroporen aufweisenden Metall-Festbettkatalysator nach Raney auf der Basis einer Legierung aus Aluminium und mindestens einem Metall der VIII. Nebengruppe des Periodensystems, der dadurch gekennzeichnet ist, daß der Katalysator einen Gehalt an Makroporen von mehr als 80 Vol.-%, bezogen auf die Gesamtporen, besitzt.

### DER KATALYSATOR UND SEINE HERSTELLUNG

Der im Rahmen der vorliegenden Anmeldung verwendete Begriff "*Makroporen*" bezeichnet gemäß der Definition in *Pure Applied Chem*., 45, S. 71 ff, insbesondere S. 79 (1976), Poren, deren Durchmesser 50 nm übersteigt. Der Gehalt an Makroporen, bezogen auf die Gesamtporen, d.h. die Makroporosität des erfindungsgemäßen Katalysators liegt bei mehr als 80 Vol.-%, vorzugsweise bei mindestens 90 Vol.-% und insbesondere bei mehr als 95 Vol.-%, jeweils bezogen auf die Gesamtporen.

Dabei ist zu beachten, daß erfindungsgemäß zunächst ein metallpulverfreier Katalysatorvorläufer auf der Basis einer Legierung aus Aluminium und mindestens einem Metall der VII. Nebengruppe des Periodensystems hergestellt wird, z.B. gemäß den Stufen (1) bis (3) des weiter hinten beschriebenen erfindungsgemäßen Verfahrens, der eberfalls einen Gehalt an Makroporen von mehr als 80 Vol-%, bezogen auf die Gesamtporen, besitzt.

Der Gehalt an α-Al₂O₃ wird im allgemeinen relativ niedrig gehalten, da, wie oben bereits ausgeführt, α-Al₂O₃ für eine Aktivierung des Katalysators nicht zugänglich ist, und liegt vorzugsweise bei weniger als 1 Gew.-%, weiter bevorzugt bei weniger als 0,5 Gew.-% und insbesondere bei weniger als 0,3 Gew.-%, jeweils bezogen auf das Gesamtgewicht des Katalysators. Die Untergrenze des α-Al₂O₃-Gehalts liegt im allgemeinen bei ungefähr 0,01 Gew.-%.

Obwohl als Legierungsbestandteil neben Aluminium prinzipiell alle Metalle der VIII. Nebengruppe des Periodensystems oder Gemische aus zwei oder mehr dieser Metalle zur Herstellung des erfindungsgemäßen Metall-Festbettkatalysators verwendet werden können, werden als Metalle der VIII. Nebengruppe des Periodensystems bevorzugt Nickel, Cobalt, Eisen oder Kupfer oder ein Gemisch aus zwei oder mehr davon eingesetzt.

Das Gewichtsverhältnis von Aluminium zu Übergangsmetall liegt in der Regel im Bereich von ungefähr 30 bis ungefähr 70 Gew.-% Aluminium und ungefähr 30 bis ungefähr 70 Gew.-% Metall der VIII. Nebengruppe des Periodensystems.

Zur Erhöhung der Aktivität und Selektivität werden die erfindungsgemäßen Katalysatoren gemäß einer weiteren Ausführungsform noch mit mindestens einem Element der IV., V., VI. oder VIII. Nebengruppe des Periodensystems oder einem Gemisch aus zwei oder mehr davon promotiert. Besonders geeignete Promotoren sind Chrom, Eisen, Cobalt, Tantal, Titan, Molybdän oder Metalle der VIII. Nebengruppe des Periodensystems. Dabei ist zu beachten, daß, sofern ein Element der VIII. Nebengruppe des Periodensystems oder ein Gemisch aus zwei oder mehr solcher Elemente als Promotor verwendet wird, diese(s) stets verschieden von dem oben genannten mindestens einen Metall der VIII. Nebengruppe als Legierungsbestandteil ist.

Dabei ist es möglich, die Promotoren entweder dem Ausgangsgemisch zur Herstellung der Legierung zuzufügen oder diese nachträglich auf den aktivierten Katalysator aufzubringen. Sofern ein Promotor verwendet wird, beträgt dessen Gehalt am Gesamtgewicht des Katalysators ungefähr 0,01 bis ungefähr 15 Gew.-%, vorzugsweise ungefähr 0,1 bis 5 Gew.-%.

Die Herstellung der Aluminiumlegierung des erfindungsgemäßen Katalysators erfolgt in bekannter Weise, beispielsweise gemäß dem in der DE 2 159 736 beschrieben Verfahren, dessen Inhalt bezüglich der Herstellung von Legierungen aus Aluminium und mindestens einem Metall der VIII. Nebengruppe des Periodensystems der hier in Rede stehenden Art durch Bezugnahme in die vorliegende Anmeldung einbezogen wird.

Demgemäß betrifft die vorliegende Erfindung auch ein Verfahren zur Herstellung eines aktivierten, metallpulverfreien Makroporen aufweichenden Matall-Festbettkatalysators nach Raney auf der Basis einer Legierung aus Aluminium und mindestens einem Metall der VIII Nebengruppe des Periodensystems, wobei der Katalysator einen Gehalt an Makroporen von mehr als 80 Vol.-%, bezogen auf die Gesamtporen, besitzt, das die folgenden Stufen umfaßt:
(1) Herstellen einer Knetmasse enthaltend die Legierung, ein Verformungsmittel, Wasser und einen Porenbildner,
(2) Verformen der Knetmasse zu einem Formkörper,
(3) Calcinieren des Formkörpers,
(4) Behandeln des calcinierten Formkörpers mit einem Alkalimetallhydroxid,
   dadurch gekennzeichnet, daß als Porenbildner mindestens ein mit Wasser mischbares Polymer mit einer Molmasse von mehr als 6.000 bis 500.000 g/mol eingesetzt wird.

Als Verformungsmittel können alle im Stand der Technik verwendeten Verformungsmittel, wie sie beispielsweise in den US-Patentschriften 4,826,799, 4,895,994, 3,404,551 und 3,358,495 genannt sind, verwendet werden. Vorzugsweise werden Wachse, wie z.B. Wachs C Mikropulver PM der HOECHST AG, Fette wie Magnesium oder Aluminiumstearate, oder Kohlenhydrat enthaltende Polymere, wie Tylose (Methylcellulose), eingesetzt, weiter bevorzugt werden Stearinsäure und Tylose verwendet. Der Gehalt des Verformungsmittels in der Knetmasse beträgt im allgemeinen ungefähr 0,1 bis ungefähr 3 Gew.-%, vorzugsweise ungefähr 0,2 bis ungefähr 2 Gew.-%, bevorzugt ungefähr 0,5 bis ungefähr 1 Gew.-%.

Als Porenbildner können alle wassermischbaren Polymere eingesetzt werden, sofern sie eine Molmasse von mehr als 6.000 bis ungefähr 500.000 g/mol aufweisen. Ihr Molekulargewicht beträgt vorzugsweise ungefähr 10.000 bis ungefähr 200.000 g/mol, weiter bevorzugt ungefähr 13.000 bis ungefähr 150.000 g/mol und insbesondere ungefähr 13.000 bis ungefähr 50.000 g/mol.

Beispiele für im Rahmen des erfindungsgemäßen Verfahrens als Porenbildner verwendbare Polymere schließen Polyvinylchlorid, Copolymere eines Olefins mit polaren Comonomeren, wie z.B. Ethylen oder Propylen mit Polyvinylchlorid, Polyvinylidenchloridcopolymere, ABS-Harze, Poylethylencopolymere mit Vinylacetat, Alkylacrylate, Acrylsäure usw., chlorierte Polyethylene, chlorosulfonierte Polyethylene, thermoplastische Polyurethane, Polyamide, wie z.B. Nylon-5, Nylon-12, Nylon-6/6, Nylon-6/10, Nylon-11, Fluor enthaltende Harze, wie z.B. FEP, Polyvinylidenfluorid, Polychlortrifluorethylen, Acrylnitril-Methyl(meth)acrylat-Copolymere, Acrylnithl-Vinylchlorid-Copolymere, Styrol-Acrylnitril-Copolymere, wie z.B. Methacrylnitril-Styrol-Copolymere, Polyalkyl(meth)acrylate, Celluloseacetat, Celluloseacetatbutyrat, Polycarbonate, Polysulfone, Polyphenylenoxid, Polyester, wie z.B. Butylentherephthalat, und Polyvinylalkohol, wobei Polyvinylalkohol besonders bevorzugt ist.

Der Gehalt des Porenbildners in der Knetmasse beträgt ungefähr 1 bis ungefähr 20 Gew.-%, bevorzugt ungefähr 4 bis ungefähr 8 Gew.-%, jeweils bezogen auf das Gesamtgewicht der Knetmasse.

Bei der Wahl des als Porenbildner zu verwendenden Polymers ist es wichtig, daß es sich um ein mit Wasser mischbares Polymer handelt, damit dieses im Rahmen des erfindungsgemäßen Verfahrens aus dem Formkörper möglichst vollständig entfernt werden kann und somit der erfindungsgemäß angestrebte Gehalt an Makroporen von mehr als 80 Vol.-% erreicht werden kann.

Im folgenden soll nunmehr die Herstellung des erfindungsgemäßen Katalysators detailliert beschrieben werden.

Erfindungsgemäß stellt man in der Regel zunächst eine Knetmasse aus der Legierung, dem Verformungsmittel und dem Porenbildner her. Diese kann zu Formkörper geformt werden, wobei Tabletten und Stränge bevorzugt sind. Die Verarbeitung zu den Formkörpern wird in hierfür bekannten Apparaturen, beispielsweise in Extrudern, Tabletten- oder Strangpressen, durchgeführt.

In einer bevorzugten Ausführungsform werden zunächst die Legierung mit dem Verformungsmittel und dem üblicherweise festen Polymer als Porenbildner vermischt und anschließend portionsweise so lange Wasser zugegeben, bis eine gut formbare, plastische Masse erhalten wird. Zur Herstellung derartiger Knetmassen verwendet man die üblicherweise verwendeten Misch- oder Knetvorrichtungen.

In einer besonderen Ausführungsform werden Stränge mit einem Durchmesser von 3,0 mm hergestellt, die in der Regel sofort nach dem Austreten aus dem Extruder einer Temperatur im Bereich von 100 bis 200°C für einen Zeitraum von 0,2 bis 2 Minuten zum Antrocknen ausgesetzt werden. Anschließend erfolgt eine Trocknung bei 120 °C über 12 bis 24 Stunden.

Die Calcinierung der Formkörper wird vorzugsweise als besonders schonender dreistufiger Calcinierungsprozeß bei Atmosphärendruck durchgeführt. Dabei werden die Formkörper vorzugsweise zunächst 1 bis 3 Stunden bei ungefähr 400 bis ungefähr 500°C, danach 1 bis 3 Stunden bei ungefähr 700 bis ungefähr 800°C und anschließend bei 1 bis 3 Stunden bei ungefähr 900 bis ungefähr 1.000°C behandelt. Die Calcinierung wird üblicherweise bei Atmosphärendruck an Luft vorgenommen.

Die Aktivierung der calcinierten Formkörper wird erfindungsgemäß mit einem Alkalimetallhydroxid, vorzugsweise Lithiumhydroxid, Natriumhydroxid, Kaliumhydroxid oder Cäsiumhydroxid einzeln oder im Gemisch, besonders bevorzugt Natriumhydroxid einzeln oder im Gemisch mit den oben genannten Alkalimetallhydroxiden, durchgeführt. In der Regel werden wäßrige Lösungen des Alkalimetallhydroxids, bevorzugt Natronlauge, verwendet, wobei ein Gewichtsverhältnis von Wasser zu Alkalimetallhydroxid von im allgemeinen ungefähr 10 : 1 bis ungefähr 30 : 1, vorzugsweise ungefähr 15 : 1 bis ungefähr 25 : 1 verwendet wird. Das Molverhältnis von Alkalimetallhydroxid zu Aluminium beträgt in der Regel ungefähr 1 : 1 bis ungefähr 4 : 1, vorzugsweise ungefähr 1,5 : 1 bis ungefähr 2,5 : 1.

Die Temperatur der Aktivierung beträgt üblicherweise ungefähr 25°C bis ungefähr 95°C, vorzugsweise ungefähr 45°C bis ungefähr 90°C.

Die Dauer der Aktivierung hängt im wesentlichen vom gewünschten Endgehalt an Aluminium ab und liegt im Bereich von 10 bis 30 Stunden, vorzugsweise 15 bis 25 Stunden. Die Aktivierungsprozedur kann auch mehrfach durchgeführt werden.

Nach der Aktivierung werden die Formkörper mit Wasser gewaschen, vorzugsweise bis ein pH-Wert von mindestens 8 des Waschwassers erreicht ist. Die gewaschenen, aktivierten Formkörper werden unter Wasser, vorzugsweise in einer Mischung aus Wasser und Methanol aufbewahrt.

Die so hergestellten Katalysatoren besitzen eine hohe mechanische Stabilität.

Ferner betrifft die vorliegende Erfindung einen aktivierten, metallpulverfreien, Makroporen aufweisenden Metall-Festbettkatalysator nach Raney auf der Basis einer Legierung aus Aluminium und mindestens einem Metall der VIII. Nebengruppe des Periodensystems, erhältlich durch ein Verfahren, das die folgenden Stufen umfaßt:
(1) Herstellen einer Knetmasse enthaltend die Legierung, ein Verformungsmittel, Wasser und einen Porenbildner,
(2) Verformen der Knetmasse zu einem Formkörper,
(3) Calcinieren des Formkörpers,
(4) Behandeln des calcinierten Formkörpers mit einem Alkalimetallhydroxid,
   wobei als Porenbildner mindestens ein mit Wasser mischbares Polymer mit einer Molmasse von mehr als 6.000 bis ungefähr 500.000 g/mol eingesetzt wird, sowie eine Vorstufe für einen aktivierten, metallpulverfreien, Makroporen aufweisenden Metall-Festbettkatalysator nach Raney auf der Basis einer Legierung aus Aluminium und mindestens einem Metall der VIII. Nebengruppe des Periodensystems, erhältlich durch ein Verfahren, das die folgenden Stufen umfaßt:
   (1) Herstellen einer Knetmasse enthaltend die Legierung, ein Verformungsmittel, Wasser und einen Porenbildner,
   (2) Verformen der Knetmasse zu einem Formkörper,
   (3) Calcinieren des Formkörpers,
      die dadurch gekennzeichnet ist, daß als Porenbildner mindestens ein mit Wasser mischbares Polymer mit einer Molmasse von mehr als 6.000 bis 500.000 g/mol eingesetzt wird.

Die erfindungsgemäßen Katalysatoren können für Hydrierungen, Dehydrierungen, Hydrogenolysen, aminierende Hydrierungen und Dehalogenierungen von organischen Verbindungen, vorzugsweise zur Hydrierung von C-C- und C-N-Doppel- und -Dreifachbindungen, von carbonylgruppenhaltigen Verbindungen, zur Etherspaltung, zur Reduktion von Nitroverbindungen und Oximen und zur Herstellung von sekundären Aminen aus Ketonen und primären Aminen verwendet werden.

Der Begriff "organische Verbindung", wie er im Rahmen der vorliegenden Erfindung verwendet wird, umfaßt alle organischen Verbindungen, die katalytisch umgesetzt werden können, insbesondere solche, die mit Wasserstoff zu behandelnde Gruppen, wie z.B. C-C-Doppel- oder C-C-Dreifach-Bindungen, aufweisen. Er umfaßt sowohl niedermolekulare organische Verbindungen als auch Polymere. "Niedermolekulare organische Verbindungen" sind dabei Verbindungen mit einem Molekulargewicht von unter 500. Der Begriff "Polymer" ist dahingehend definiert, daß er Moleküle mit einem Molekulargewicht von mehr als ungefähr 500 bezeichnet.

Die vorliegende Erfindung betrifft insbesondere ein Verfahren zur Umsetzung einer organischen Verbindung in Gegenwart eines Katalysators wie hierin definiert, wobei die Umsetzung eine Hydrierung, Dehydrierung, Hydrogenolyse, aminierende Hydrierung oder Dehalogenierung, weiter bevorzugt eine Hydrierung ist.

Dabei können insbesondere organische Verbindungen eingesetzt werden, die eine oder mehrere der folgenden Struktureinheiten aufweisen:

C=C (I)

C≡C (II)

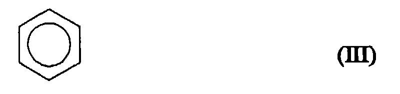

C=N (IV)

C≡N (V)

C=O (VI)

C=S (VII)

―NO₂ (VIII)

Dabei sind beispielhaft zu nennen:

Die Hydrierung von aromatischen Verbindungen, wie z.B. Benzol, Toluolen, Xylolen, Naphthalinen sowie substituierten Derivaten dävon, zu den entsprechenden alicyclischen Verbindungen; die Hydrierung von Alkenen oder Alkinen, wie z.B. Ethylen, Propylen, 1-, 2-Buten, 1-, 2-, 3- und 4-Octen, zu den entsprechenden Alkanen; die Hydrierung von Nitroalkanen, wie z.B. Nitroethan, Nitromethan, Nitropropan und 1,1-Dinitroethan zu den entsprechenden Aminen; die Hydrierung von Nitroaromaten, wie z.B. Nitrotoluole, Nitrobenzol, Dinitrobenzole und -toluole, Nitro- und Dinitroxylole, Nitronaphthaline, Chlor- und Dichlornitrobenzole; die Hydrierung von Nitrilen vorzugsweise aliphatischen und aromatischen Mono- und Dinitrilen, wie z.B. Acetonitril, Propionitril, Butyronitril, Stearinsäurenitril, Isocrotonsäurenitril, 3-Butennitril, Propinnitril, 3-Butinnitril, 2,3-Butadiennitril, 2,4-Pentadiennitril, 3-Hexen-1,6-dinitril, Chloracetonitril, Trichloracetonitril, Milchsäurenitril, Phenol-Acetonitril, 2-Chlorbenzonitril, 2,6-Dichlorbenzonitril, Isophthalsäuredinitril und Terephthalsäuredinitril, insbesondere von aliphatischen α,ω-Dinithlen, wie z.B. Bernsteinsäuredinitril, Glutarsäuredinitril, Adipinsäuredinitril, Pimelinsäuredinitril und Korksäuredinitril, oder Aminonitrilen, wie z.B. 4-Aminobutansäurenitril, 5-Aminopentansäurenitril, 6-Aminohexansäurenitril, 7-Aminoheptansäureritril und 8-Aminooctansäurenitril, zu den entsprechenden Mono- bzw. Diaminoverbindungen; die Hydrierung von Iminen, wie z.B. Chinonimininen, Ketiminen, Keteniminen oder aliphatischen Iminen, wie z.B. Propanimin, Hexanimin; die Dehalogenierung von Halogenatome enthaltenden organischen Verbindungen, insbesondere von aromatischen halogenhaltigen Verbindungen, wie z.B. Chlor- und Brombenzol, Brom- und Chlortoluolen sowie Chlor- und Bromxylolen, wobei dort auch jeweils mit mehreren Halogenatomen substituierte Verbindungen eingesetzt werden können; die aminierende Hydrierung von z.B. Alkoholen, wie z.B. Vinylalkohol.

Mit dem erfindungsgemäßen Verfahren können C = O-Gruppen enthaltende Verbindungen, also insbesondere Aldehyde, Ketone, Carbonsäuren und deren Derivate, wie z.B. Carbonsäureester, Carbonsäurehalogenide und Carbonsäureanhydride sowie Gemische aus zwei oder mehr der oben genannten Verbindungen umgesetzt, insbesondere hydriert werden.

Dabei werden insbesondere Aldehyde und Ketone, vorzugsweise solche mit 1 bis 20 C-Atomen, wie z.B. Formaldehyd, Acetaldehyd, Propionaldehyd, n-Butyraldehyd, Valeraldehyd, Caproaldehyd, Heptaldehyd, Phenylacetaldehyd, Acrolein, Crotonaldehyd, Benzaldehyd, o-Tolualdehyd, m-Tolualdehyd, p-Toluoaldehyd, Salicylaldehyd, Anisaldehyd, Vanillin, Zimtaldehyd, Aceton, Methylethylketon, 2-Pentanon, 3-Pentanon, 2-Hexanon, 3-Hexanon, Cyclohexanon, Isophoron, Methylisopropylketon, Methylisopropenylketon, Methylsec-butylketon, Methylisobutylketon, Mesityloxid, Acetophenon, Propiophenon, Benzophenon, Benzalaceton, Dibenzalaceton, Benzalacetophenon, Glykolaldehyd, Glyceraldehyd, Glyoxal, 2,3-Butandion, 2,4-Pentandion, 2,5-Hexandion, Terephthaldialdehyd, Glutardialdehyd, Diethylketon, Methylvinylketon, Acetylaceton, 2-Ethylhexanal oder Gemische aus zwei oder mehr davon eingesetzt.

Ferner kommen auch Polyketone, wie z.B. Ethylen/CO-Copolymere zum Einsatz.

Ferner lassen sich Carbonsäuren und Derivate davon umsetzen, wobei solche mit 1 bis 20 C-Atomen bevorzugt sind. Im einzelnen zu nennen sind:

Carbonsäuren, wie z.B. Ameisensäure, Essigsäure, Propionsäure, Buttersäure, Isobuttersäure, n-Valeriansäure, Trimethylessigsäure ("Pivalinsäure"), Capronsäure, Önanthsäure, Caprylsäure, Caprinsäure, Laurinsäure, Myristinsäure, Palmitinsäure, Stearinsäure, Acrylsäure, Methäcrylsäure, Ölsäure, Elaidinsäure, Linolsäure, Linolensäure, Cyclohexancarbonsäure, Benzoesäure, Phenylessigsäure, o-Toluylsäure, m-Toluylsäure, p-Toluylsäure, o-Chlorbenzoesäure, p-Chlorbenzoesäure, o-Nitrobenzoesäure, p-Nitrobenzoesäure, Salicylsäure, p-Hydroxybenzoesäure, Anthranilsäure, p-Aminobenzoesäure, Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephtnalsäure;

Carbonsäurehalogenide, wie z.B. die Chloride oder Bromide der oben genannten Carbonsäuren, insbesondere Acetylchlorid oder -bromid, Stearylchlorid oder -bromid und Benzoylchlorid oder -bromid, die insbesondere dehalogeniert werden;

Carbonsäureester, wie z.B. die C₁-C₁₀-Alkylester der oben genannten Carbonsäuren, insbesondere Methylformiat, Essigester, Buttersäurebutylester, Terephthalsäuredimethylester, Adipinsäuredimethylester, (Meth)acrylsäuremethylester, Buryrolacton, Caprolacton und Polycarbonsäureester, wie z.B. Polyacryl- und Polymethacrylsäureester und deren Copolymere und Polyester, wie z.B. Polymethylmethacrylat, wobei hier insbesondere Hydrogenolysen, also die Umsetzung von Estern zu den entsprechenden Säuren und Alkoholen, durchgeführt werden;

Carbonsäurearhydride, wie z.B. die Anhydride der oben genannten Carbonsäuren, insbesondere Essigsäureanhydrid, Propionsäureanhydrid, Benzoesäurearhydrid und Maleinsäureanhydrid.

Carbonsäureamide, wie z.B. Formamid, Acetamid, Propionamid, Stearamid, Terephthalsäureamid.

Ferner können auch Hydroxycarbonsäuren, wie z.B. Milch-, Äpfel-, Wein- oder Zitronensäure, oder Aminosäuren, wie z.B. Glycin, Alanin, Prolin und Arginin, umgesetzt werden.

Die erfindungsgemäßen Katalysatoren können insbesondere für Hydrierungen, Dehydrierungen, Hydrogenolysen, aminierende Hydrierungen und Dehalogenierungen von großen Molekülen, vorzugsweise von polymeren Verbindungen, verwendet werden.

Demgemäß betrifft die vorliegende Erfindung auch ein Verfahren zur Hydrierung eines Polymers, das mindestens eine hydrierbare Gruppe aufweist, in Gegenwart des erfindungsgemäßen Katalysators, wobei die Hydrierung von Nitrilgruppen aufweisenden Polymeren, wie z.B. Styrol-Butadien-Copolymeren, Acrylnitril-Copolymeren und die aminierende Hydrierung von Polyvinylalkoholen und Polyketonen bevorzugt ist.

Insbesondere betrifft die vorliegende Erfindung ein Verfahren zur Hydrierung eines Polymers, das mindestens eine Nitrilgruppe aufweist, in Gegenwart des oben genannten Katalysators.

Der Begriff *"Polymer, das mindestens eine hydrierbare Einheit aufweist"* steht für alle Polymere, die hydrierende Einheiten aufweisen, insbesondere für Polymere, die Einheiten der folgenden Strukturen (I) bis (VIII) oder ein Halogenatom aufweisen. Dabei ist es selbstverstähdlich, daß die hier in Rede stehenden Polymere die jeweilige Einheit mindestens einmal enthalten und sich auch innerhalb des erfindungsgemäß umgesetzten Polymers eine oder mehrere Einheiten von zwei oder mehr der folgenden Strukturen befinden können:

C=C (I)

C≡C (II)

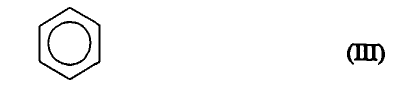

C=N (IV)

C≡N (V)

C=O (VI)

C=S (VII)

―NO₂ (VIII)

Das Gewichtsmittel des Molekulargewichts der im erfindungsgemäßen Verfahren zu hydrierenden Polymere beträgt im allgemeinen ungefähr 500 bis ungefähr 500.000, vorzugsweise ungefähr 1.000 bis ungefähr 100.000 und weiter bevorzugt ungefähr 1.000 bis ungefähr 50.000.

Als Beispiele für im Rahmen des erfindungsgemäßen Verfahrens hydrierbare Polymere sind die folgenden zu nennen:

Polymere mit C―C-Doppelbindungen, wie z.B. Polybutadiene, wie z.B. Poly(2,3-dimethylbutadien), Polyisopren, Polyacerylene und Polycyclopenta- und -hexadiene; Polymere mit C―C-Dreifachbindungen, wie z.B. Polydiacetylene; Polymere mit aromatischen Gruppen, wie z.B. Polystyrol, Acrylnithl-Butadien-Styrol-Terpolymere und Styrol-Acrylnitril-Copolymere; Polymere mit C―N-Dreifachbindungen, wie z.B. Polyacryinitril, Polyacrylnitril-Copolymere mit z.B. Vinylchlorid, Vinylidenchlorid, Vinylacetat oder (Meth)acrylsäureestern oder Gemischen aus zwei oder mehr davon als Comonomere; Polymere mit C―O-Doppelbindungen, wie z.B. Polyester, Polyacrylamide, Polyacrylsäuren, Polyharnstoffe und Polyketone; Polymere mit C―S-Doppelbindungen, wie z.B. Polysulfone und Polyethersulfone; halogerhaltige Polymere, wie z.B. Polyvinylchlorid und Polyvinylidenchlorid; sowie Nitrogruppen enthaltende Polymere, die durch Nitrierung von z.B. Polyolefinen durch polymeranaloge Umsetzung erhalten werden können.

Beispiele für im Rahmen der vorliegenden Erfindung bevorzugt eingesetzte Polymere schließen Polyisopren, Polybutadien, Styrol-Butadien-Copolymere, Acrylnitril-Butadien-Copolymere, Acrylnithl-Sryrol-Butadien-Copolymere, Styrol-Isopren-Styrol-Triblockcopolymere, Sryrol-Butadien-Sryrol-Triblockcopolymere und Styrol-Butadien-Styrol-Sternblock-Copolymere ein.

Im allgemeinen findet eine vollständige Hydrierung der eingesetzten Edukte statt. Die Hydrierung kann jedoch auch so durchgeführt werden, daß durch geeignete Wahl von Temperatur, H₂-Druck und H₂-Menge lediglich eine Art von hydrierbaren Gruppen hydriert wird, während die andere Art von hydrierbaren Gruppen nicht hydriert wird.

Besonders geeignet ist das erfindungsgemäße Verfahren zur Hydrierung von Polymeren, die Einheiten verschiedener Strukturen, wie oben definiert, enthalten, z.B. Polymere, die sowohl C-C-Mehrfachbindungen als auch Nitrilgruppen aufweisen, da die im Rahmen des erfindungsgemäßen Verfahrens verwendeten Katalysatoren in der Lage sind, zunächst die Nitrilgruppen selektiv zu hydrieren, d.h. eine Hydrierung dieser Gruppen von ungefähr 90 bis 100% zu erreichen, während zunächst gleichzeitig die ethylenisch ungesättigten Bereiche zu weniger als 25% und im allgemeinen in einem Bereich von 0 bis ungefähr 7% hydriert werden.

Nach Beendigung der Hydrierung der in den Polymeren vorhandenen Nitrilgruppen ist es selbstverständlich möglich, durch weitere Zufuhr von Wasserstoff auch die restlichen, im Polymer vorhandenen ungesättigten Gruppen, wie z.B. ethylenische Einheiten, nahezu quantitativ zu hydrieren.

Das erfindungsgemäße Verfahren kann sowohl für bereits isolierte als auch für lebende Polymere eingesetzt werden.

Beim erfindungsgemäßen Verfahren bzw. der erfindungsgemäßen Verwendung kann die Hydrierung unter Abwesenheit eines Lösungs- oder Verdünnungsmittels durchgeführt werden, d.h. es ist nicht erforderlich, die Hydrierung in Lösung durchzuführen.

Es kann auch eine Schmelze des Polymers direkt hydriert werden.

Vorzugsweise wird jedoch ein Lösungs- oder Verdünnungsmittel eingesetzt. Als Lösungs- oder Verdünnungsmittel kann jedes geeignete Lösungs- oder Verdünnungsmittel eingesetzt werden. Die Auswahl ist nicht kritisch, jedoch sollte das Lösungs-/Verdünnungsmittel unter den Hydrierbedingungen inert sein. Die Lösungs-/Verdünnungsmittel können jedoch auch geringe Mengen an Wasser enthalten.

Beispiele geeigneter Lösungs- oder Verdünnungsmittel schließen die folgenden ein:

Kohlenwasserstoffe, wie z.B. Hexan, Cyclohexan, Methylcyclohexan, Heptan, Octan, Toluol usw., und geradkettige oder cyclische Ether, wie z.B. Tetrahydrofuran, Dioxan, Dibutylether, Methyl-tert.-Butylether usw,. Ketone, wie z.B. Methylethylketon und Aceton, Ester, wie z.B. Ethylacetat, oder Amide,
wie z.B. DMF und N-Methylpyrrolidon.

Vorzugsweise werden Cyclohexan, Toluol oder THF eingesetzt. Gemische dieser und anderer Lösungs- und Verdünnungsmittel können ebenfalls verwendet werden.

Sofern das Polymer durch Lösungspolymerisation erhalten wurde, kann die das Polymer enthaltende resultierende Lösung direkt zur Hydrierung im erfindungsgemäßen Verfahren eingesetzt werden.

Die Menge des eingesetzten Lösungs- oder Verdünnungsmittels ist im Rahmen des erfindungsgemäßen Verfahrens nicht in besonderer Weise beschränkt und kann je nach Bedarf frei gewählt werden, wobei jedoch solche Mengen bevorzugt sind, die zu einer 1 bis 70-%igen, vorzugsweise 1 bis 40 Gew.-%igen, Lösung, des zur Hydrierung vorgesehenen Polymers führen.

Die Hydrierung wird bei geeigneten Drücken und Temperaturen durchgeführt. Bevorzugt sind Drücke oberhalb von 2 · 10⁶ Pa, vorzugsweise von 5 · 10⁶ Pa bis 4 · 10⁷ Pa. Bevorzugte Temperaturen liegen in einem Bereich von ungefähr 30°C bis ungefähr 250°C, vorzugsweise zwischen ungefähr 100°C und ungefähr 220°C und insbesondere zwischen ungefähr 150°C und ungefähr 200°C.

Das Hydrierungsverfahren kann kontinuierlich oder als Batch-Verfahren durchgeführt werden.

Bei kontinuierlicher Verfahrensführung beträgt die Menge des zur Hydrierung vorgesehenen Polymers bzw. der Polymere vorzugsweise 0,01 bis ungefähr 1 kg pro Liter Katalysator pro Stunde, weiter bevorzugt ungefähr 0,05 bis ungefähr 0,7 pro Liter Katalysator pro Stunde.

Als Hydriergase können beliebige Gase verwendet werden, die freien Wasserstoff enthalten und keine schädlichen Mengen an Katalysatorgiften, wie beispielsweise CO, aufweisen. Beispielsweise können Reformerabgase verwendet werden. Vorzugsweise wird reiner Wasserstoff als Hydriergas verwendet.

Die Erfindung wird im folgenden anhand von einigen Ausführungsbeispielen näher erläutert.

### BEISPIELE

### Beispiel 1

### Herstellung von Katalysator A:

Zu einem Gemisch aus 900 g einer Cobalt/Aluminium-Legierung, bestehend aus 52 Gew.-% Cobalt und 48 Gew.-% Aluminium, 8 g Tylose und 60 g eines Polyvinylalkohols mit einer Molmasse von 85.000 - 146.000 g/mol wurden portionsweise 170 g Wasser gegeben und die Masse 6 Stunden lang in einem Kneter geknetet. Danach wurde die so erhaltene Knetmasse bei einem Preßdruck von 45 - 50 bar in einer Strangpresse zu Extrudaten mit einem Durchmesser von 3 mm verformt. Die so erhaltenen Stränge wurden bei einer Temperatur von 120 °C 16 h lang getrocknet. Die Calcinierung erfolgte zunächst 1 h bei 450 °C, dann 1 h bei 750 °C und abschließend 2 h bei 900 °C. Zur Aktivierung wurden 500 g der so hergestellten Stränge mit 1,5 l einer 20 %-igen NaOH-Lösung bei 90 °C versetzt. Nach 24 h wurde die überschüssige NaOH-Lösung abdekantiert und die aktivierten Stränge so lange mit Wasser gewaschen, bis der pH-Wert des Waschwassers auf 7,5 gesunken war. Diese Aktivierungsbehandlung wurde insgesamt viermal durchgeführt.

Der so erhaltene Katalysator besaß ein Gesamtporenvolumen von 0,44 ml/g und ein Makroporenvolumen von 0,40 ml/g; der Anteil der Makroporen lag somit bei 91%. Mit Hilfe von Röntgendiffraktometrie (XRD) war kein α-Aluminiumoxid nachweisbar.

### Beispiel 2

### Herstellung von Katalysator B:

Zu einem Gemisch aus 900 g einer Cobalt/Aluminium-Legierung, bestehend aus 52 Gew.-% Cobalt und 48 Gew.-% Aluminium, 8 g Tylose und 80 g eines Polyvinylalkohols mit einer Molmasse von 85.000 - 146.000 g/mol wurden portionsweise 200 g Wasser gegeben und die Masse 4 Stunden lang in einem Kneter geknetet. Danach wurde die so erhaltene Knetmasse bei einem Preßdruck von 6,5 · 10⁶ Pa (65 bar) in einer Strangpresse zu Extrudaten mit einem Durchmesser von 3 mm verformt. Die so erhaltenen Stränge wurden bei einer Temperatur von 120 °C 16 h lang getrocknet. Die Calcinierung erfolgte zunächst 1 h bei 450 °C, dann 1 h bei 750 °C und abschließend 2 h bei 900 °C. Zur Aktivierung wurden 500 g der so hergestellten Stränge mit 1,5 l einer 20 %-igen NaOH-Lösung bei 90 °C versetzt. Nach 24 h wurde die überschüssige NaOH-Lösung abdekantiert und die aktivierten Stränge so lange mit Wasser gewaschen, bis der pH-Wert des Waschwassers auf 7,5 gesunken war. Diese Aktivierungsbehandlung wurde insgesamt viermal durchgeführt.

Der so erhaltene Katalysator besaß ein Gesamtporenvolumen von 0,58 ml/g und ein Makroporenvolumen von 0,54 ml/g; der Anteil der Makroporen lag somit bei 93%. Mit Hilfe von XRD war kein α-Aluminiumoxid nachweisbar.

### Beispiel 3

### Herstellung von Katalysator C:

Zu einem Gemisch aus 900 g einer Cobalt/Aluminium-Legierung, bestehend aus 52 Gew.-% Cobalt und 48 Gew.-% Aluminium, 8 g Tylose und 60 g eines Polyvinylalkohols mit einer Molmasse von 13.000 - 23.000 g/mol wurden portionsweise 230 g Wasser gegeben und die Masse 3 h lang in einem Kneter geknetet. Danach wurde die so erhaltene Knetmasse bei einem Preßdruck von 6,5 · 10⁶ Pa (65 bar) in einer Strangpresse zu Extrudaten mit einem Durchmesser von 3 mm verformt. Die so erhaltenen Stränge wurden bei einer Temperatur von 120°C 16 h lang getrocknet. Die Calcinierung erfolgte zunächst 1 h bei 450°C, dann 1 h bei 750°C und abschließend 2 h bei 900°C. Zur Aktivierung wurden 500 g der so hergestellten Stränge mit 1,5 l einer 20 %-igen NaOH-Lösung bei 90 °C versetzt. Nach 24 h wurde die überschüssige NaOH-Lösung abdekantiert und die aktivierten Stränge so lange mit Wasser gewaschen, bis der pH-Wert des Waschwassers auf 7,5 gesunken war. Diese Aktivierungsbehandlung wurde einmal durchgeführt.

Der so erhaltene Katalysator besaß ein Gesamtporenvolumen von 0,35 ml/g und ein Makroporenvolumen von 0,32 ml/g; der Anteil der Makroporen lag somit bei 91%. Mit Hilfe von XRD war kein α-Aluminiumoxid nachweisbar.

### Beispiel 4

### Hydrierung unter Verwendung von Katalysator A:

In einen 300 ml-Druckautoklaven wurden 100 g einer 15 Gew.-%igen Lösung eines Acrylnitril-Butadien-Copolymeren mit einem Gehalt an Acrylnitril von 18 Gew.-% und einem Gewichtsmittel des Molekulargewichts von 3.000 in Tetrahydrofuran (THF), 60 ml Ammoniak und 15 g Katalysator A gegeben. Anschließend wurde diskontinuierlich bei 180°C und 2,5 · 10⁷ Pa 12 Stunden lang hydriert. Das als Lösungsmittel verwendete THF wurde abdestilliert.

Der Nitrilumsatz betrug 95%. 95% des entstandenen Amins war ein primäres Amin. Es fand kein Molekulargewichtsabbau statt.

### Beispiel 5

### Hydrierung unter Verwendung von Katalysator B:

In einen 300 ml-Druckautoklaven wurden 100 g einer 15 Gew.-%igen Lösung eines Acrylnitril-Butadien-Copolymeren mit einem Gehalt an Acrylnitril von 18 Gew.-% und einem Gewichtsmittel des Molekulargewichts von 3.000 in Tetrahydrofuran (THF), 60 ml Ammoniak und 15 g Katalysator B gegeben. Anschließend wurde diskontinuierlich bei 180°C und 2,5 · 10⁷ Pa 12 Stunden lang hydriert. Das als Lösungsmittel verwendete THF wurde abdestilliert.

Der Nitrilumsatz betrug 96%. Es fand kein Molekulargewichtsabbau statt.

### Beispiel 6

### Hydrierung unter Verwendung von Katalysator C:

In einen 300 ml-Druckautoklaven wurden 100 g einer 15 Gew.-%igen Lösung eines Acrylnitril-Butadien-Copolymeren mit einem Gehalt an Acrylnitril von 18 Gew.-% und einem Gewichtsmittel des Molekulargewichts von 3.000 in Tetrahydrofuran (THF), 60 ml Ammoniak und 15 g Katalysator C gegeben. Anschließend wurde diskontinuierlich bei 180°C und 2,5 · 10⁷ Pa 12 Stunden lang hydriert. Das als Lösungsmittel verwendete THF wurde abdestilliert.

Der Nitrilumsatz betrug 85%. Es fand kein Molekulargewichtsabbau statt.

## Patentansprüche

1. Aktivierter metallpulverfreier, Makroporen aufweisender Metall-Festbettkatalysator nach Raney auf der Basis einer Legierung aus Aluminium und mindestens einem Metall der VIII. Nebengruppe des Periodensystems, dadurch gekennzeichnet, daß der Katalysator einen Gehalt an Makroporen von mehr als 80 Vol-%, bezogen auf die Gesamtporen, besitzt.

2. Katalysator nach Anspruch 1, dadurch gekennzeichnet, daß er als Metall der VIII. Nebengruppe Nickel, Cobalt, Kupfer, Eisen oder ein Gemisch aus zwei oder mehr davon enthält.

3. Katalysator nach Anspruch 1 oder 2, dadurch gekennzeichnet, daß er einen Gehalt an α-Al₂O₃ von weniger als 1 Gew.-% bezogen auf das Gesamtgewicht des Katalysators aufweist.

4. Verfahren zur Herstellung eines aktivierten, metallpulverfreien Makroporen aufweichenden Metall-Festbettkatalysators nach Raney auf der Basis einer Legierung aus Aluminium und mindestens einem Metall der VIII Nebengruppe des Periodensystems, wobei der Katalysator ein Gahalt an Makroporen von mehr als 80 Vol.-%, bezogen auf die Gesamtporen besitzt, das die folgenden Stufen umfaßt:
(1) Herstellen einer Knetmasse enthaltend die Legierung, ein Verformungsmittel, Wasser und einen Porenbildner,
(2) Verformen der Knetmasse zu einem Formkörper,
(3) Calcinieren des Formkörpers,
(4) Behandeln des calcinierten Formkörpers mit einem Alkalimetallhydroxid,
dadurch gekennzeichnet, daß als Porenbildner mindestens ein mit Wasser mischbares Polymer mit einer Molmasse von mehr als 6.000 bis 500.000 g/mol eingesetzt wird.

5. Verfahren nach Anspruch 4, dadurch gekennzeichnet, daß das Calcinieren der Formkörper in einem 3-Stufenprozeß bei Atmosphärendruck durchgeführt wird.

6. Aktivierter, metallpulverfreier, Makroporen aufweisender Metall-Festbettkatalysator nach Raney auf der Basis einer Legierung aus Aluminium und mindestens einem Metall der VIII. Nebengruppe des Periodensystems, erhältlich durch ein Verfahren, das die folgenden Stufen umfaßt:
(1) Herstellen einer Knetmasse enthaltend die Legierung, ein Verformungsmittel, Wasser und einen Porenbildner,
(2) Verformen der Knetmasse zu einem Formkörper,
(3) Calcinieren des Formkörpers,
(4) Behandeln des calcinierten Formkörpers mit einem Alkalimetallhydroxid,
dadurch gekennzeichnet, daß als Porenbildner mindestens ein mit Wasser mischbares Polymer mit einer Molmasse von mehr als 6.000 bis 500.000 g/mol eingesetzt wird.

7. Vorstufe für einen aktivierten, metallpulverfreien, Makroporen aufweisenden Metall-Festbettkatalysator nach Raney auf der Basis einer Legierung aus Aluminium und mindestens einem Metall der VIII. Nebengruppe des Periodensystems, erhältlich durch ein Verfahren, das die folgenden Stufen umfaßt:
(1) Herstellen einer Knetmasse enthaltend die Legierung, ein Verformungsmittel, Wasser und einen Porenbildner,
(2) Verformen der Knetmasse zu einem Formkörper,
(3) Calcinieren des Formkörpers,
dadurch gekennzeichnet, daß als Porenbildner mindestens ein mit Wasser mischbares Polymer mit einer Molmasse von mehr als 6.000 bis ungefähr 500.000 g/mol eingesetzt wird.

8. Verwendung eines Katalysators gemäß einem der Ansprüche 1 bis 3 oder 6 oder eines Katalysators, hergestellt wie in Anspuch 4 oder 5 definiert, zur Hydrierung, Dehydrierung, Hydrogenolyse, aminierenden Hydrierung und Dehalogenierung von organischen Verbindungen.

9. Verfahren zur Hydrierung eines Polymers, das mindestens eine hydrierbare Einheit aufweist, in Gegenwart eines Katalysators gemäß einem der Ansprüche 1 bis 3 oder 6 oder eines wie in Anspruche 4 oder 5 definiert hergestellten Katalysators.

10. Verfahren nach Anspruch 9, dadurch gekennzeichnet, daß das Polymer mindestens eine hydrierbare Einheit aufweist, die unter einer C-C-Doppelbindung, einer C-C-Dreifachbindung, einer C-N-Doppelbindung, einer C-N-Dreifachbindung, einer Carbonylgruppe, einer C-S-Doppelbindung, einer Nitrogruppe, einer aromatischen Gruppe oder einem Halogenatom ausgewählt wird.
